# EUROPÄISCHE PATENTSCHRIFT

(11) **EP 4 056 292 B1**
(45) Veröffentlichungstag und Bekanntmachung des Hinweises auf die Patenterteilung: **31.01.2024**
(21) Anmeldenummer: 22154662.5
(22) Anmeldetag: 02.02.2022
(51) Int. Cl.: B09C 1/00, E21B 43/08

(54) **MEHRFACHFILTERANORDNUNG**
MULTIPLE FILTER ASSEMBLY
AGENCEMENT DE FILTRES MULTIPLES

(30) Priorität: 12.03.2021 DE 202021101247 U
(43) Veröffentlichungstag der Anmeldung: 14.09.2022
(73) Patentinhaber: IEG - Technologie GmbH, 73344 Gruibingen (DE)
(72) Erfinder: Alesi, Dr., Eduard J., 73344 Gruibingen (DE)
(74) Vertreter: Ruckh, Rainer Gerhard

(56) Entgegenhaltungen:
- EP-A1- 0 505 011
- CN-A- 110 075 605
- DE-U1-202019 105 023
- US-A- 5 646 337

## Beschreibung

Die Erfindung betrifft eine Mehrfachfilteranordnung.

Eine derartige Mehrfachfilteranordnung weist eine Anzahl von einzelnen Filteranordnungen auf, die üblicherweise verteilt im Erdreich verankert sind und unabhängig voneinander arbeiten.

Eine derartige Filteranordnung dient allgemein zur Behandlung und Reinigung von Grundwasser. Hierzu werden in einem unterirdischen Schacht mehrere die Filteranordnung bildende Filtereinheiten in Abstand übereinander angeordnet, wobei mit den einzelnen Filtereinheiten im Boden vorhandenes Grundwasser gereinigt werden kann. Auch ist es möglich von den Filtereinheiten Wasser zu einer oberirdischen Wasseraufbereitungseinheit über geeignete Rohrsysteme mit zugeordneten Pumpen zuzuführen.

Um eine fehlerfreie Funktion der einzelnen Filtereinheiten zu gewährleisten, und insbesondere um hydraulische Kurzschlüsse der den einzelnen Filtereinheiten zugeordneten Pumpen zu vermeiden, sind zwischen benachbarten Filtereinheiten im Schacht wasserdichte Abschlüsse vorgesehen. Diese wasserdichten Abschlüsse sind bei bekannten Filteranordnungen in Form von pneumatischen Packern ausgebildet. Derartige pneumatische Packer bilden aufblasbare Einheiten, wobei ein pneumatischer Packer im aufgeblasenen Zustand einen im Zwischenraum zwischen zwei benachbarten Filtereinheiten wasserdichten, sich über den gesamten Querschnitt des Schachts erstreckenden Abschluss bildet.

Ein Nachteil derartiger pneumatischer Packer besteht darin, dass deren Installation relativ aufwändig ist. Zudem ist nachteilig, dass die pneumatische Packer in regelmäßigen Zeitintervallen gewartet werden müssen, was einen weiteren unerwünschten Zeit- und Bearbeitungsaufwand mit sich bringt. Zudem sind derartige pneumatische Packer relativ teuer.

Weiterhin ist nachteilig, dass die pneumatischen Packer aus Materialien bestehen, die nicht resistent gegen im Wasser vorhandene Chemikalien sind. Dies bedeutet, dass die sich pneumatischen Packer im Laufe der Zeit zersetzen und ausgetauscht werden müssen.

Schließlich besteht ein wesentlicher Nachteil von pneumatischen Packern aufweisenden Filteranordnungen darin, dass die Anzahl der Filtereinheiten begrenzt ist, da nicht beliebig viele Pumpen in den jeweiligen Förderrohren vorgesehen werden. Dies beruht insbesondere darauf, dass die Pumpen im unteren Bereich der Förderrohre aufwändig installiert werden müssen.

Die EP 0 505 011 A1 betrifft eine Einrichtung zur Reinigung von Grundwasser. Die Einrichtung umfasst eine Anordnung von in einem Erdreich vorhandenen Rohren, denen jeweils Pumpvorrichtungen in Form von Vakuumpumpen zugeordnet sind. Mit den Pumpvorrichtungen wird Grundwasser über Saugrohre und einem Entladungsrohr einer Behandlungsstation zugeführt, wo das Grundwasser behandelt wird. Die Saugrohre, das Entladungsrohr und die Behandlungsstation sind oberirdisch, d.h. außerhalb des Erdreichs angeordnet.

Die DE 20 2019 105 023 U1 betrifft eine Filteranordnung mit einer Mehrfachanordnung von in einem unterirdischen Schacht angeordneten Filtereinheiten, wobei die Filtereinheiten im Schacht in Abstand übereinander angeordnet sind, wobei zwei benachbarte Filtereinheiten durch eine wasserdichte Schicht von Quellmaterial getrennt sind und wobei an den einzelnen Filtereinheiten periphere Steigrohre ausmünden, die bis zur Erdoberfläche verlaufen.

Die CN 110 075 605 A betrifft eine Anordnung zur Förderung von kontaminiertem Grundwasser. Die Anordnung umfasst eine Mehrfachanordnung von Pumpen, die in unterschiedlichen Höhenlagen eines Schachts in einem Erdreich positioniert sind.

Die US 5 646 337 A betrifft ein Verfahren zur Messung von Parametern eines Erdreichs. In einem Loch im Erdreich ist ein Rohr eingebracht, um Grundwasser zu sammeln. Das Rohr umfasst mehrere geschlossene Kammern, durch welche Leitungen geführt sind, die mit Messeinrichtungen gekoppelt sind.

Der Erfindung liegt die Aufgabe zugrunde, eine Mehrfachfilteranordnung bereitzustellen, welche eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Mehrfachfilteranordnung mit einer Anordnung von Filteranordnungen. Jede Filteranordnung weist ein Rohr auf, in welchem eine modulare Anordnung von in Abstand übereinander angeordneten Filtereinheiten angeordnet ist, wobei jedes Rohr in einem unterirdischen in ein Erdreich eingearbeiteten Schacht angeordnet ist. Jedes Rohr weist wasserundurchlässige Wandsegmente auf, die mit wasserdurchlässigem Material umgeben sind. Im Bereich der Filtereinheiten sind Durchlassöffnungen des Rohrs vorgesehen, welche von einem wasserdurchlässigen Material umgeben sind. Über die Durchlassöffnung kann ein Wasseraustausch mit dem das Rohr umgebenden Erdreich erfolgen, so dass im Erdreich verlaufende Grundwasserkreisläufe ausgehend von einer Filtereinheit einer Filteranordnung zu einer weiteren Filtereinheit dieser Filteranordnung erhalten wird. Die Durchlassöffnungen erstrecken sich jeweils über begrenzte Winkelbereiche des Rohres und sind derart
angeordnet, dass die Grundwasserkreisläufe dieser Filteranordnung gerichtet in Richtung der benachbarten Filteranordnung verlaufen. Die Grundwasserkreisläufe benachbarter Filteranordnungen stehen miteinander in Wechselwirkung, wobei die Strömungsrichtung des Wassers abhängig vom Wasserdruck des Wassers in den Filtereinheiten ist.

Ein wesentlicher Aspekt der Erfindung besteht darin, dass die einzelnen Filteranordnungen der Mehrfachfilteranordnung nicht unabhängig voneinander arbeiten, sondern über ihre Grundwasserkreisläufe miteinander wechselwirken. Die Mehrfachfilteranordnung bildet somit eine synergetische Anordnung von Filteranordnungen, die durch ihre Wechselwirkungen auch komplexe Filter- und Reinigungsvorgänge des Grundwassers durchführen können.

Da sich die Filteranordnungen der Mehrfachfilteranordnung über einen großen Raumbereich erstrecken kann in diesem Raumbereich das Grundwasser gereinigt werden, was gegenüber einer isolierten Filteranordnung eine erhebliche Effizienzsteigerung darstellt.

Gemäß einer vorteilhaften Ausführungsform sind die Durchlassöffnungen einer Filteranordnung derart ausgebildet, dass die Grundwasserkreisläufe dieser Filteranordnung gerichtet in Richtung der benachbarten Filteranordnung verlaufen.

Erfindungsgemäß erstrecken sich die Durchlassöffnungen jeweils über begrenzte Winkelbereiche des Rohres.

Damit wird erreicht, dass die von einer Filteranordnung ausgehenden Grundwasserkreisläufe gezielt nur in Richtung der benachbarten Filteranordnungen verlaufen. Dabei entspricht die Anzahl der einer Filtereinheit zugeordneten Durchlassöffnungen der Anzahl der benachbarten Filteranordnungen. Die Winkelbereiche der Durchlassöffnungen sind so dimensioniert, dass eine gerichtete Strömung der Grundwasserkreisläufe der Filteranordnung nur in Richtung der benachbarten Filteranordnungen erhalten wird. Da dies symmetrisch auch für alle benachbarten Filteranordnungen gilt ist gewährleistet, dass sich die Grundwasserkreisläufe benachbarter Filteranordnungen vollständig oder nahezu vollständig treffen, wodurch eine besonders effiziente Wechselwirkung dieser Grundwasserkreisläufe erhalten wird.

Vorteilhaft erstrecken sich alle Durchlassöffnungen einer Filteranordnung jeweils über denselben Winkelbereich.

Für die vertikal in Abstand übereinander angeordneten Filtereinheiten einer Filteranordnung wird somit dieselbe Richtcharakteristik für die Vorgabe der Strömung des Grundwassers erhalten, das heißt die Durchlassöffnungen für alle Filtereinheiten einer Filteranordnung sind in Richtung der benachbarten Filteranordnung orientiert.

Die Mehrfachfilteranordnung kann unterschiedliche geometrische Anordnungen von Filteranordnungen ausbilden, wobei insbesondere lineare oder polygonale Anordnungen möglich sind.

Die zur Ausbildung der erfindungsgemäßen Mehrfachfilteranordnung eingesetzten Filteranordnungen zeichnen sich vorteilhaft durch einen modularen Aufbau aus.

Die Anzahl und Art der Filtereinheiten, die zur Reinigung von in einem Erdreich vorhandenen Grundwasser vorgesehen ist, kann spezifisch an die Bodenbeschaffenheiten des Erdreichs angepasst werden, wodurch sich eine hohe Funktionalität der erfindungsgemäßen Filteranordnung ergibt.

Diese flexible Modularität wird insbesondere dadurch erreicht, dass Pumpen in die einzelnen Förderrohre von oben, das heißt über ihre an der Oberfläche des Erdreichs freiliegenden Öffnungen eingeführt werden können, wodurch eine besonders einfache Montage der Pumpen erzielt wird. Aufwändige unterirdische Montagen von Pumpen, die die Anzahl der installierbaren Pumpen und damit letztlich auch die Anzahl der Filtereinheiten in der Filteranordnung begrenzen, entfallen somit.

Die Montage erfolgt vorteilhaft einfach dadurch, dass eine Pumpe in einem Förderrohr in eine einer Filtereinheit zugeordnete Sollposition absenkbar ist.

Die Sollposition kann von einer Umlenkung der Förderrohre gebildet sein. Auch können von der Innenwand des Förderrohrs Lagefixiermittel wie zum Beispiel Stege hervorstehen, die die Sollpositionen definieren.

Allgemein ist ein Förderrohr, in welches eine Pumpe eingeführt ist, zur Ausleitung von Wasser ausgebildet.

Das Förderrohr bildet dann ein Pumprohr aus, mit dem Wasser von einer Filtereinheit nach oben gepumpt wird und insbesondere einer oberirdisch angeordneten Behandlungsstation, das heißt in einer Wasseraufbereitungseinheit zugeführt wird.

Vorteilhaft befindet sich die untere Ausmündung des Förderrohrs im Bereich einer Filtereinheit, so dass von dort Wasser abgepumpt werden kann.

Weiterhin sind Förderrohre zur Einleitung von Wasser ausgebildet.

In diesem Fall sind oberirdisch Pumpen angeordnet, die Wasser, insbesondere nach einer Behandlung in einer Behandlungsstation im Förderrohr nach unten pumpen und so einer Filtereinheit zuführen, wobei auch in diesem Fall vorteilhaft die Ausmündung im Bereich einer Filtereinheit liegt.

Aufgrund der entsprechenden Ausbildung der Förderrohre derart, dass diese generell eine obere Ausmündung, die oberhalb der Erdoberfläche ausmündet, und eine untere Ausmündung im Bereich einer Filtereinheit aufweisen, können diese wahlweise zur Einleitung oder Ausleitung von Wasser zu oder von einer Filtereinheit verwendet werden, wobei die Konfiguration bei Bedarf jederzeit geändert werden kann, was eine flexible Anpassung an unterschiedliche Applikationen ermöglicht. Zur Konfiguration eines Förderrohrs zur Einleitung von Wasser, das heißt zur Konfiguration als Pumprohr, braucht lediglich eine Pumpe in dieses eingeführt werden.

Gemäß einer vorteilhaften Ausführungsform sind die Filtereinheiten in voneinander wasserdicht separierten Kameras angeordnet.

Dabei ist zweckmäßig, dass jeweils ein Förderrohr einer Kammer zugeordnet ist.

Durch die wasserdichte Trennung der einzelnen Filtereinheiten ist gewährleistet, dass jede Filtereinheit unbeeinflusst an den jeweils anderen Filtereinheiten arbeiten kann. Weiterhin werden auf diese Weise auch hydraulische Kurzschlüsse zwischen den Filtereinheiten vermieden.

Gemäß einer konstruktiv vorteilhaften Ausgestaltung verlaufen die Längsachsen der Förderrohre parallel zur Längsachse des Rohrs, wobei die Längsachse des Rohrs und damit des Schachts in vertikaler Richtung verläuft.

Die Förderrohre und das Rohr bestehen vorteilhaft aus Edelstahl. Die Filtereinheiten können aus Kunststoff oder einem metallischen Werkstoff bestehen. Vorteilhaft sind die Filtereinheiten in Form von Wickeldrahtfiltern ausgebildet.

Die wasserundurchlässigen Wandsegmente des Rohrs sind von einem wasserdichten Material umgeben, wobei sich herfür insbesondere ein Quellmaterial wie Bentonit eignet. Die wasserdurchlässigen, von den Filtereinheiten gebildeten Wandsegmente des Rohrs sind von einem wasserdurchlässigen Material wie zum Beispiel Kies umgeben.

Gemäß einer ersten Variante weist die Filteranordnung periphere Förderrohre, das heißt außerhalb des die Filtereinheiten aufnehmenden Rohrs verlaufende Förderrohre auf.

Die Förderrohre verlaufen dabei parallel in Abstand zueinander und zum Rohr. Vorteilhaft bilden die peripheren Förderrohre eine zum Rohr rotationssymmetrische Anordnung.

Bei dieser Variante sind vorteilhaft die Kammern durch Trennplatten wasserdicht getrennt.

Die Trennplatten bestehen vorzugsweise aus Edelstahl und erstrecken sich über die gesamte Querschnittsfläche des Rohrs. Vorzugsweise sind die Trennplatten an der Innenwand des Rohrs angeschweißt.

In den durch die Trennwände getrennten Kammern befindet sich jeweils nur eine Filtereinheit. Zweckmäßig münden die peripheren Förderrohre jeweils unterhalb einer Filtereinheit in das Rohr ein.

Gemäß einer zweiten Variante weist die Filteranordnung eine konzentrische Anordnung von innerhalb des Rohrs verlaufenden Förderrohre auf, wobei diese symmetrisch zur Längsachse, das heißt Symmetrieachse des Rohrs angeordnet sind.

Dabei münden die konzentrischen Förderrohre mit ihren oberen Enden oberhalb der Oberfläche des Erdreichs, in welchem der Schacht eingearbeitet ist, aus.

Weiterhin liegen die unteren Enden der konzentrischen Förderrohre in unterschiedlichen Höhenlagen und sind dabei jeweils einer Filtereinheit zugeordnet.

Somit ist jeweils ein Förderrohr einer Filtereinheit zugeordnet, wobei die einzelnen Filtereinheiten wieder wasserdicht entkoppelt sind. Vorteilhaft liegen die Ausmündungen der unteren Enden der Förderrohre dicht oberhalb der Filtereinheiten.

Gemäß einer vorteilhaften Ausführungsform sind die konzentrischen Förderrohre jeweils in einem an der Innenwand des Rohrs befestigten Zentriereinsatz gelagert.

Dabei ist an der Außenwand eines Förderrohrs ein Dichtkegel vorgesehen, der in eine zentrale Öffnung des zugeordneten Zentriereinsatzes einführbar ist.

Die Montage eines Förderrohrs innerhalb des Rohrs erfolgt somit einfach dadurch, dass das Förderrohr von oben in das Rohr eingeführt und dann in die Öffnung des zugeordneten Zentriereinsatzes eingeführt wird. Dabei verriegelt der Dichtkegel am Förderrohr die Öffnung im Zentriereinsatz und sorgt so für eine selbsttätige Lagefixierung des Förderrohrs, ohne dass hierzu weitere Arbeitsvorgänge notwendig sind.

Weiterhin bildet ein Zentriereinsatz mit dem zugeordneten Dichtkegel ein wasserdichtes Trennelement, wobei mit diesem Kammern mit Filtereinheiten wasserdicht separiert sind.

Die Montage dieser Filteranordnungen erfolgt derart, dass zunächst das Rohr im Schacht positioniert wird. Dabei sind an der Innendwand des Rohrs die einzelnen Zentriereinsätze in unterschiedlichen Höhenstufen als vormontierte Einheiten befestigt.

In einem ersten Schritt wird das Förderrohr mit dem kleinsten Außendurchmesser im Rohr montiert, wobei dieses mit dem Dichtkegel am untersten Zentriereinsatz fixiert wird. In diesem Bereich mündet das untere Ende des ersten Förderrohrs aus.

Dann erfolgt die Montage des zweiten Förderrohrs, dessen Außendurchmesser größer als der Außendurchmesser des ersten Förderrohrs ist. Das zweite Förderrohr umgibt das erste Förderrohr, wobei die Seitenwände der Förderrohre in Abstand zueinander liegen. Das zweite Förderrohr wird an dem zweituntersten Zentriereinsatz lagefixiert. In diesem Bereich mündet das untere Ende des zweiten Förderrohrs aus. In entsprechender Weise werden die weiteren Förderrohre montiert, wobei allgemein das n-te Förderrohr das (n-1)te Förderrohr umgibt und das n-te Förderrohr im n-ten Zentriereinsatz lagefixiert wird, der oberhalb des (n-1)ten Zentriereinsatzes liegt.

Die Erfindung wird im Folgenden anhand der Zeichnungen erläutert. Es zeigen:
- Figur 1:: Beispiel einer ersten Variante einer Filteranordnung für die erfindungsgemäße Mehrfachfilteranordnung.
- Figur 2:: Beispiel einer zweiten Variante einer Filteranordnung für die erfindungsgemäße Mehrfachfilteranordnung.
- Figur 3a:: Detaildarstellung der Anordnung gemäß Figur 2 mit einem Zentriereinsatz und einem zugeordneten Dichtkegel an einem Förderrohr.
- Figur 3b:: Anordnung gemäß Figur 3a bei im Zentriereinsatz fixierten Dichtkegel.
- Figur 4:: Erstes Ausführungsbeispiel der erfindungsgemäßen Mehrfachfilteranordnung.
a) Längsschnittdarstellung
b) Querschnittdarstellung
- Figur 5:: Zweites Ausführungsbeispiel der erfindungsgemäßen Mehrfachfilteranordnung.
- Figur 6:: Drittes Ausführungsbeispiel der erfindungsgemäßen Mehrfachfilteranordnung.
- Figur 7:: Variante der Anordnung gemäß Figur 6.

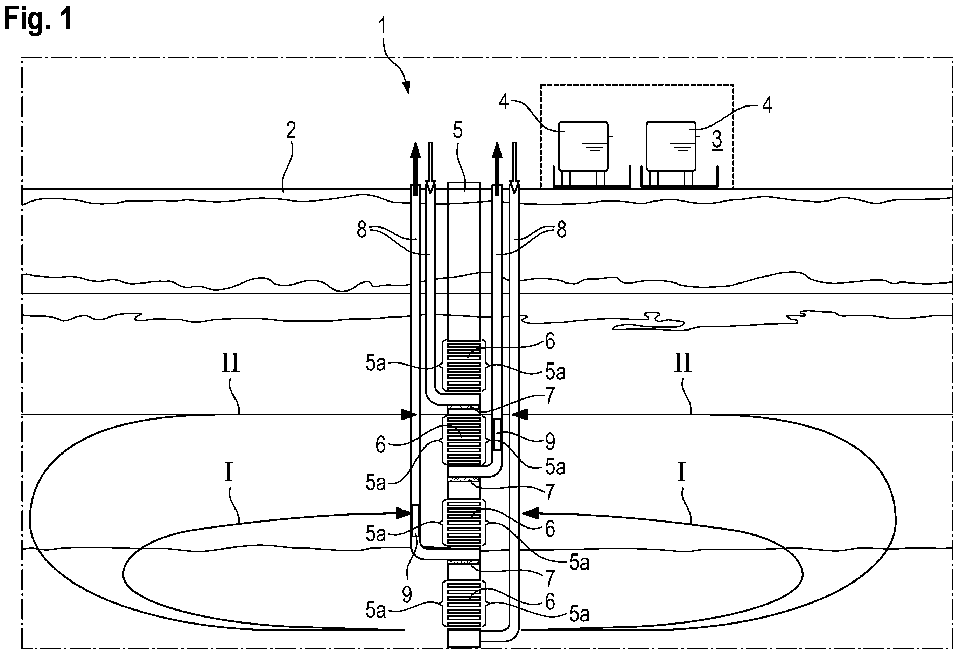

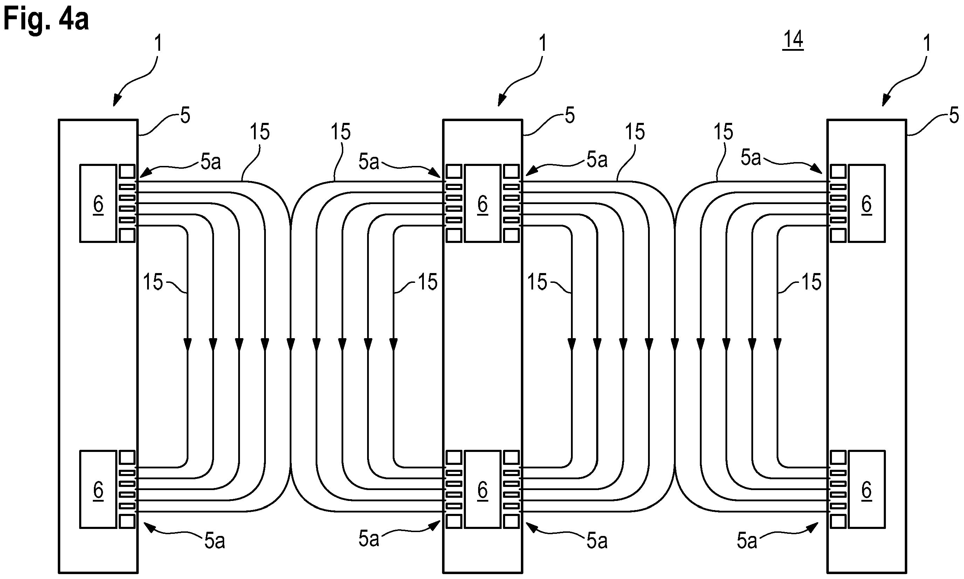

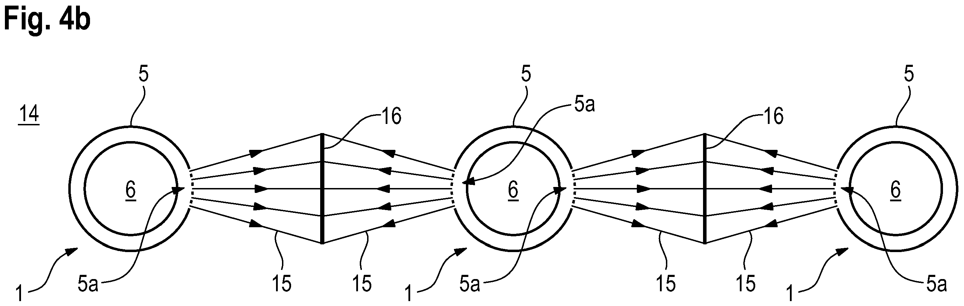

Figur 1 zeigt ein Beispiel einer ersten Variante einer Filteranordnung 1 für die erfindungsgemäße Mehrfachfilteranordnung 14 gemäß den Figuren 4 bis 7. Diese ist in einem unterirdischen Schacht integriert, der in ein Erdreich 2 eingearbeitet ist und an der Oberfläche des Erdreichs 2 ausmündet. Der Filteranordnung 1 ist eine oberirdisch angeordnete Wasseraufbereitungseinheit 3 zugeordnet, die typischerweise mehrere Behandlungsstationen 4 zur Aufbereitung von im Erdreich 2 vorhandenen Grundwasser dient.

Die im Schacht angeordnete Filteranordnung 1 weist ein zylindrisches Rohr 5 auf, dessen Längsachse in vertikaler Richtung verläuft. Das Rohr 5 besteht vorteilhaft aus Edelstahl.

Im Rohr 5 sind mehrere Filtereinheiten 6 in Abstand übereinander angeordnet. Die Filtereinheiten 6 können aus Kunststoff, Stahl oder sonstigen metallischen Werkstoffen bestehen. Im vorliegenden Fall sind die Filtereinheiten 6 als Wickeldrahtfilter ausgebildet. In den Filtereinheiten 6 werden physikalische Behandlungen wie zum Beispiel Absorptionsprozesse zur Filterung von Schadstoffen durchgeführt.

Das Rohr 5 weist wasserundurchlässige Wände auf. Diese Wände weisen im Bereich der Filtereinheit 6 Durchlassöffnungen 5a auf. Über die Durchlassöffnungen 5a erfolgt ein Wasseraustausch zwischen dem umgebenden Erdreich 2 und den Filtereinheiten 6.

Die wasserundurchlässigen Wandsegmente des Rohrs 5 sind mit wasserundurchlässigem Material, insbesondere einem Quellmaterial wie Bentonit umgeben.

Dagegen sind die den Filtereinheiten 6 zugeordneten Durchlassöffnungen 5a des Rohrs 5 von einem wasserdurchlässigen Material wie zum Beispiel Kies umgeben. Dadurch ist ein Wasseraustausch zwischen den Filtereinheiten 6 und dem Erdbereich ermöglicht, das heißt es kann Grundwasser aus dem Erdreich 2 den Filtereinheiten 6 zugeführt werden, oder es kann aufbereitetes Wasser von den Filtereinheiten 6 in das Erdreich 2 geleitet werden, wobei die Strömungsrichtung des Wassers abhängig vom Wasserdruck in den Filtereinheiten 6 ist. Eine beispielhafte Wasserzirkulation ist in Figur 1 mit Pfeilen I, II gekennzeichnet.

Die einzelnen Filtereinheiten 6 sind in voneinander wasserdicht separierten Kammern einzeln angeordnet. Zur Ausbildung dieser Kammern sind in vorliegenden Trennplatten 7 aus Edelstahl vorgesehen, die an die Innendwand des Rohrs 5 angeschweißt sind.

Wie Figur 1 zeigt, weist die Filteranordnung 1 eine Anordnung von peripheren, das heißt außerhalb des Rohrs 5 verlaufenden Förderrohren 8 auf. Die Längsachsen der Förderrohre 8 verlaufen parallel zueinander und parallel zur Längsachse des Rohrs 5. Die Förderrohre 8 sind in Abstand zueinander und in Abstand zum Rohr 5 angeordnet, wobei die Förderrohre 8 insbesondere eine rotationssymmetrische Anordnung derart bilden, dass benachbarte Förderrohre 8 jeweils um dieselben Winkel versetzt zueinander angeordnet sind.

Die oberen Enden der Förderrohre 8 münden dicht oberhalb der Oberfläche des Erdreichs 2 aus. Die unteren Enden der Förderrohre 8 münden in das Rohr 5 ein. Dabei ist jedes Förderrohr 8 jeweils einer Filtereinheit 6 zugeordnet. Wie Figur 1 zeigt, mündet jedes Förderrohr 8 dicht unterhalb der zugeordneten Filtereinheiten 6 in das Rohr 5 ein.

In die Förderrohre 8 können Pumpen 9 von oben über ihre Ausmündungen eingeführt werden. Figur 1 zeigt eine Anordnung, bei der in zwei der Förderrohre 8 eine Pumpe 9 eingeführt ist. Die Pumpe 9 ist im unteren Teil des Förderrohrs 8 im Bereich der zugeordneten Filtereinheiten 6 in einer Sollposition gehalten. Die Sollposition kann durch die Umlenkung des Förderrohrs 8 definiert sein. Alternativ können an der Innenwand des Förderrohrs 8 Halterungen wie zum Beispiel Stege zur Vorgabe der Sollposition vorgesehen sein.

Durch die Einführung einer Pumpe 9 in ein Förderrohr 8 wird ein Pumprohr derart gebildet, dass Wasser aus der jeweiligen Kammer mit der Filtereinheit 6 nach oben gepumpt und aus dem Pumprohr der Wasseraufbereitungseinheit 3 zugeführt wird um dort eine Behandlung dieses Wassers, insbesondere in Form chemischen, physikalischen oder biologischen Behandlungen, durchzuführen.

Die anderen Förderrohre 8, in welche keine Pumpen 9 eingeführt sind, bilden Infiltrationsrohre. Über eine oberirdische Pumpenanordnung wird Wasser aus der Wasseraufbereitungseinheit 3 in die Förderrohre 8 gepumpt und den zugeordneten Filtereinheiten 6 zugeführt.

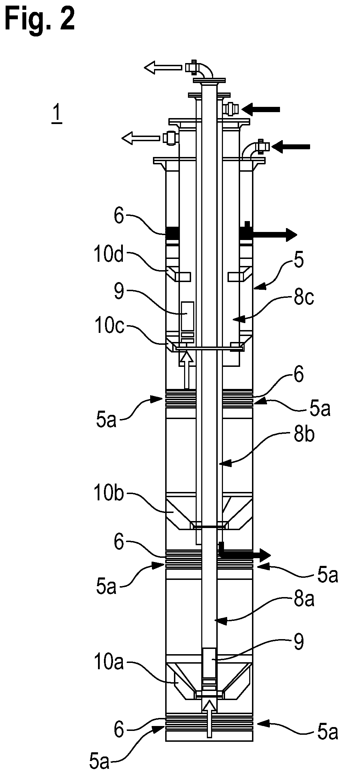

Figur 2 zeigt ein Beispiel einer zweiten Variante einer Filteranordnung 1. Diese Filteranordnung 1 ist in identischer Weise wie die Filteranordnungen 1 gemäß Figur 1 in einen Schacht im Erdreich 2 integriert und an eine oberirdische Wasseraufbereitungseinheit 3 angebunden.

Auch die Filteranordnung 1 gemäß Figur 2 weist ein Rohr 5 auf, in welchem mehrere Filtereinheiten 6 in Abstand übereinander angeordnet sind. Die Filtereinheiten 6 bilden wieder wasserdurchlässige Wandsegmente des Rohrs 5, welche an der Unterseite des Rohrs 5 mit einem wasserdurchlässigen Material wie Kies umgeben sind. Die restlichen Wandsegmente des Rohrs 5 sind wasserundurchlässig und entsprechend an der Außenseite des Rohrs 5 mit einem wasserundurchlässigen Material wie Bentonit umgeben.

Bei der Filteranordnung 1 gemäß Figur 2 ist innerhalb des Rohrs 5 eine konzentrische Anordnung von Förderrohren 8a - 8c vorgesehen, deren Längsachsen mit der Längsachse des Rohrs 5 zusammenfallen.

Die einzelnen Förderrohre 8 sind in Zentriereinsätzen 10a-d gelagert, die an der Innenwand des Rohrs 5 befestigt sind. Die Zentriereinsätze 10a - 10d weisen im vorliegenden Fall die Form von Zentriertrichtern auf.

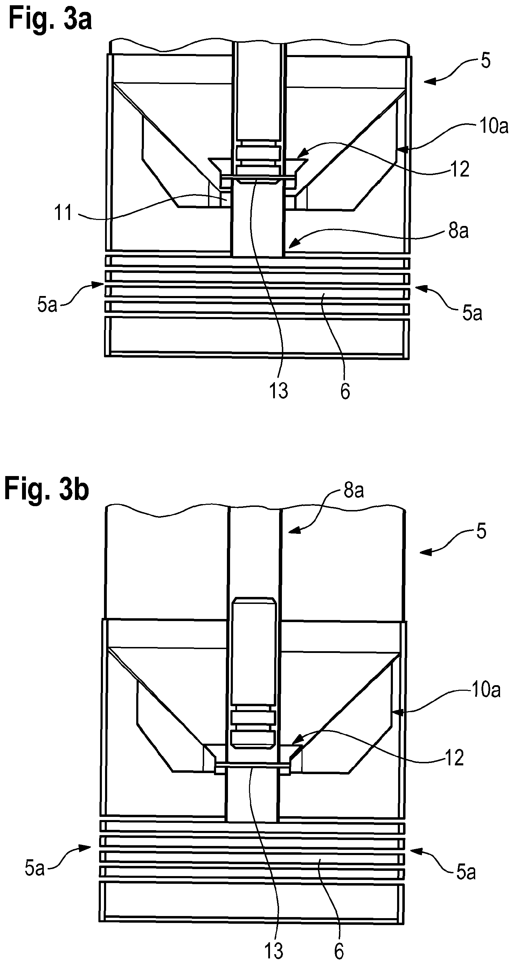

Die Figuren 3a und 3b zeigen eine Detaildarstellung des untersten Zentriereinsatzes 10a mit dem zugeordneten innersten Förderrohr 8, in deren unteren Bereich eine Pumpe 9 gelagert ist. Analog zur Ausführungsform gemäß Figur 1 können Pumpen 9 von oben in Förderrohre 8 eingeführt werden und dann in einer Sollposition nahe der zugeordneten Filtereinheit 6 lagefixiert werden.

Wie insbesondere aus Figur 3a ersichtlich, ist im Bereich des Bodens des sich nach oben verbreiternden Trichters des Zentriereinsatzes 10a eine zentrale Öffnung 11 vorgesehen.

Korrespondierend hierzu ist an der Außenseite des Förderrohrs 8a ein Dichtkegel 12 befestigt, dessen Außenkontur an die Randkontur der Öffnung 11 angepasst ist. Der Dichtkegel 12 weist als Dichtelement einen O-Ring 13 auf.

Die Montage des Förderrohrs 8a erfolgt dadurch, dass der untere Bereich des Förderrohrs 8a in die Öffnung 11 des Zentriereinsatzes 10a eingeführt wird, bis der Dichtkegel 12 an dem die Öffnung 11 begrenzenden Randbereichs des Zentriereinsatzes 10a aufsitzt und dort lagefixiert ist. Insbesondere durch den O-Ring 13 schließt der Dichtkegel 12 die Öffnung 11 dicht. Das Förderrohr 8 ist durch die Pumpe 9 ein Pumprohr, über welches Wasser von den untersten Filtereinheiten 6 nach oben zur Wasseraufbereitungseinheit 3 gepumpt wird.

Die weiteren Förderrohre 8b - 8c weisen entsprechende Dichtkegel 12 auf und werden mit diesen in Öffnungen 11 von zugeordneten Zentriereinsätzen 10b - 10d eingesetzt und so lagefixiert.

Wie Figur 2 zeigt, liegt der unterste Zentriereinsatz 10a oberhalb der untersten Filtereinheit 6 und separiert diese wasserdicht von den anderen Filtereinheiten 6.

Das zweite Förderrohr 8b umschließt das erste Förderrohr 8c und ist mit einem Dichtkegel 12 in dem zweituntersten Zentriereinsatz 10b gelagert. Das untere Ende des Förderrohrs 8b liegt dicht oberhalb der zweituntersten Filtereinheit 6.

Zwischen dem untersten Zentriereinsatz 10a und dem zweituntersten Zentriereinsatz 10b wird eine wasserdichte Kammer gebildet, in dem sich allein die zweitunterste Filtereinheit 6 befindet. Über das zweite Förderrohr 8b erfolgt eine Zufuhr von Wasser zu dieser Filtereinheit 6 in dem Wasser von oben in dieses Förderrohr 8 eingepumpt wird.

Die zweitoberste Filtereinheit 6 liegt in einer wasserdichten Kammer zwischen dem Zentriereinsatz 10b und dem Zentriereinsatz 10c, in welchem das dritte Förderrohr 8c gelagert ist. Dieses Förderrohr 8c mündet dicht oberhalb der zweitobersten Filtereinheit 6. In diesem Förderrohr 8c ist eine Pumpe 9 eingebracht, so dass dieses ein Pumprohr bildet mit dem Wasser von dieser Filtereinheit 6 nach oben gepumpt und der Wasseraufbereitungseinheit 3 zugeführt wird.

Schließlich bildet der Zentriereinsatz 10d mit dem oberen Randbereich des Rohrs 5 eine weitere wasserdichte Kammer in welcher die oberste Filtereinheit 6 gelagert ist. Dieser Filtereinheit 6 wird von oben Wasser zugeführt.

Die Montage der Filteranordnung 1 gemäß Figur 2 erfolgt derart, dass nach Installation des Rohrs 5 im Schacht zunächst das Förderrohr 8a, dann das Förderrohr 8b und schließlich das Förderrohr 8c montiert wird.

Die Figuren 4a, 4b zeigen ein erstes Ausführungsbeispiel der erfindungsgemäßen Mehrfachfilteranordnung 14.

Im vorliegenden Fall besteht die Mehrfachfilteranordnung 14 aus einer linearen Anordnung von Filteranordnungen 1 gemäß den Figuren 1 oder 2, wobei die Filteranordnungen 1 identisch ausgebildet sind. Bei dem Ausführungsbeispiel gemäß den Figuren 4a, 4b wie auch bei den folgenden Ausführungsformen sind die Rohre 5 den Filteranordnungen 1 mit in vertikaler Richtung verlaufenden Längsachsen im Erdreich 2 installiert.

Die Filteranordnungen 1 in den Figuren 4a, 4b sind sehr schematisch dargestellt. Dabei sind lediglich zwei in den jeweiligen Rohren 5 integrierte Filtereinheiten 6 dargestellt, was jedoch nicht zwingend ist. Generell können die Filteranordnungen 1 der Mehrfachfilteranordnung 14 auch unterschiedliche Anordnungen und Anzahlen von Filtereinheiten 6 aufweisen.

Die Rohre 5 der Filteranordnungen 1 der Mehrfachfilteranordnung 14 gemäß den Figuren 4a, 4b weisen den Filtereinheiten 6 zugeordneten Durchlassöffnungen 5a auf, die so ausgebildet sind, dass für jede Filteranordnung 1 ein Grundwasserkreislauf erhalten wird, der in Richtung des Grundwasserkreislaufs der jeweils benachbarten Filteranordnung verläuft. Dabei sind alle Durchlassöffnungen 5a einer Filteranordnung 1 identisch ausgebildet.

Bei der linken und rechten Filteranordnung 1 ist jeder Filtereinheit 6 eine Durchlassöffnung 5a zugeordnet, die in Richtung der mittleren Filteranordnung 1 ausgerichtet ist. Die mittlere Filteranordnung 1 weist in den Bereichen jeder Filtereinheit 6 jeweils zwei Durchlassöffnungen 5a auf, wobei eine Durchlassöffnung 5a der linken Filteranordnung 1 und die andere Durchlassöffnung 5a der rechten Filteranordnung 1 zugeordnet ist.

Jede Durchlassöffnung 5a erstreckt sich nur über einen begrenzten Winkelbereich, der im vorliegenden Fall etwa 30° beträgt. Damit wird für jede Filteranordnung 1 wenigstens ein Grundwasserkreislauf erhalten, der in Richtung der benachbarten Filteranordnung 1 verlauft. Die Figuren 4a, 4b zeigen die Strömungslinien 15 dieser Grundwasserkreisläufe.

Wie Figur 4a zeigt, sind die Grundwasserkreisläufe so ausgebildet, dass von der oberen Filtereinheit 6 Wasser in das Erdreich 2 geleitet wird, während die untere Filtereinheit 6 Wasser aus dem Erdreich 2 aufnimmt, so dass sich für jeden Grundwasserkreislauf von oben nach unten verlaufende Strömungslinien 15 ergeben.

Da die Grundwasserkreisläufe jeder Filteranordnung 1 durch die Durchlassöffnungen 5a in Richtung der jeweils benachbarten Filteranordnung 1 ausgerichtet sind, überlagern sich die Grundwasserkreisläufe etwa in der Mitte zwischen zwei benachbarten Filteranordnungen 1, wie insbesondere Figur 4a zeigt. In diesem Bereich findet eine Wechselwirkung zwischen den Grundwasserkreisläufen benachbarter Filteranordnungen 1 statt, insbesondere ein Austausch von Grundwasser und eine Begrenzung der Reichweiten der Grundwasserkreisläufe. Die Wechselwirkungsbereiche 16 sind in Figur 4b stark schematisch dargestellt.

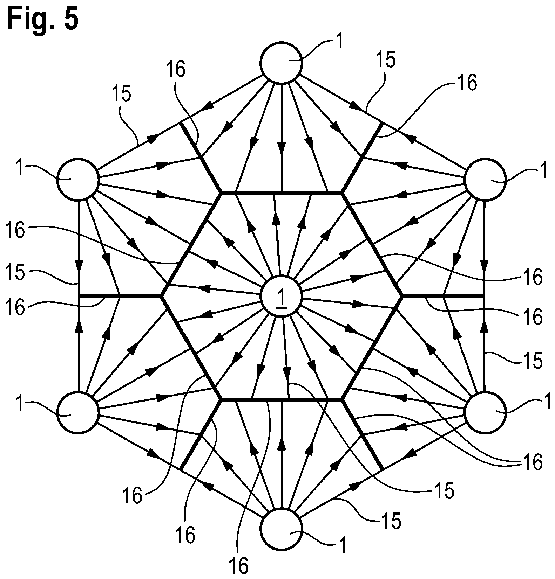

Figur 5 zeigt eine Querschnittsdarstellung einer Mehrfachfilteranordnung 14 mit einer hexagonalen Anordnung von Filteranordnungen 1.

Der Aufbau der Filteranordnungen 1 und die Generierung von Grundwasserkreisläufen für die einzelnen Filteranordnungen 1 entspricht der Ausführungsform gemäß den Figuren 4a und 4b. Entsprechend der Ausführungsform gemäß den Figuren 4a, 4b sind in Figur 5 die Strömungslinien 15 der Grundwasserkreisläufe der einzelnen Filteranordnungen 1 sowie die Wechselwirkungsbereiche 16 dargestellt.

Jede äußere Filteranordnung 1 hat mit der zentralen Filteranordnung 1 und den beiden nächstliegenden äußeren Filteranordnungen 1 drei nächste Nachbarn. Um zu diesen nächsten Nachbarn gerichtete Grundwasserkreisläufe zu erzielen, erstrecken sich die Durchlassöffnungen 5a der äußeren Filteranordnungen 1 jeweils über einen Winkelbereich von 120°, wie aus den Strömungslinien 15 der äußeren Filteranordnungen 1 erkennbar. Dagegen liegt die zentrale Filteranordnung 1 benachbart zu allen äußeren Filteranordnungen 1, die über den gesamten Winkelbereich von 360° verteilt sind. Dementsprechend erstrecken sich die Durchlassöffnungen 5a der zentralen Filteranordnung 1 über den vollen Winkelbereich von 360°.

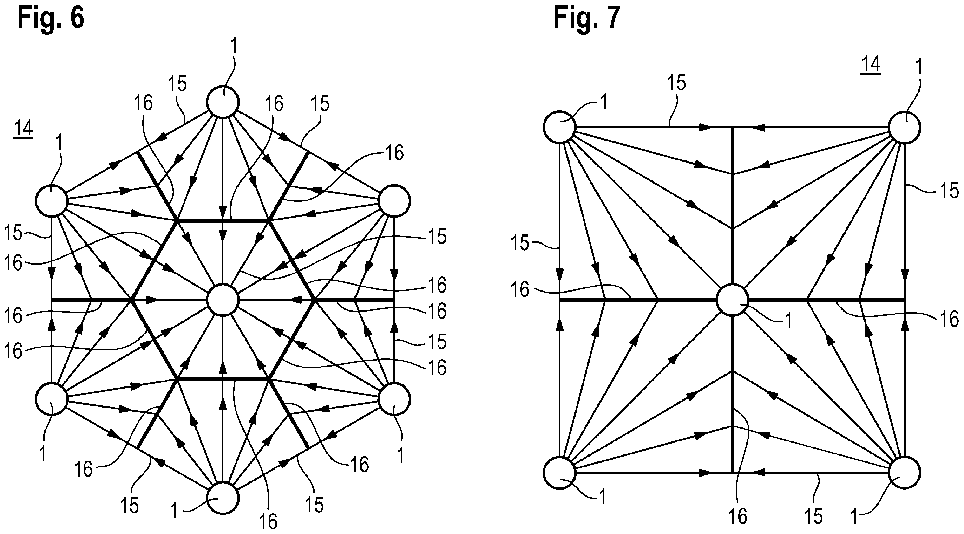

Die Ausführungsform der Mehrfachfilteranordnung 14 gemäß Figur 6 entspricht hinsichtlich ihres Aufbaus der Ausführungsform gemäß Figur 5.

Die Ausführungsform der Figur 6 unterscheidet sich von der Ausführungsform gemäß Figur 5 nur dadurch, dass die Strömungsrichtung 16 des Grundwasserkreislaufs der zentralen Filteranordnung 1 umgekehrt ist. Damit erfolgt in der in Figur 6 dargestellten Ebene die Zirkulation des Grundwassers derart, dass von den Filtereinheiten 6 der äußeren Filteranordnungen 1 Strömungen mit Strömungslinien 15 in Richtung der Filtereinheit 6 der zentralen Filteranordnung 1 ausgehen, die dieses Grundwasser aufnimmt.

Figur 7 zeigt eine Querschnittsdarstellung einer Mehrfachfilteranordnung 14 mit einer quadratischen Anordnung von Filteranordnungen 1. Der Verlauf der Strömungslinien 15 ist entsprechend der Ausführungsform gemäß Figur 6.

Jede äußere Filteranordnung 1 hat mit den beiden nächstliegenden äußeren Filteranordnungen 1 und der zentralen Filteranordnung 1 drei nächste Nachbarn, auf welche deren Grundwasserkreisläufe ausgerichtet sind. Demzufolge erstrecken sich die Durchlassöffnungen 5a der äußeren Filteranordnung 1 jeweils über einen Winkelbereich von 90°, wie aus den Verläufen der Strömungslinien 15 erkennbar. Da die zentrale Filteranordnung 1 mit allen äußeren Filteranordnungen 1 benachbart ist, erstrecken sich deren Durchlassöffnungen 5a über den selben Winkelbereich von 360°.

### Bezugszeichenliste

- (1): Filteranordnung
- (2): Erdreich
- (3): Wasseraufbereitungseinheit
- (4): Behandlungsstation
- (5): Rohr
- (5a): Durchlassöffnung
- (6): Filtereinheit
- (7): Trennplatte
- (8): Förderrohr
- (8a - c): Förderrohr
- (9): Pumpe
- (10a - d): Zentriereinsatz
- (11): Öffnung
- (12): Dichtkegel
- (13): O-Ring
- (14): Mehrfachfilteranordnung
- (15): Strömungslinie
- (16): Wechselwirkungsbereich
- I: Pfeil
- II: Pfeil

## Patentansprüche

1. Mehrfachfilteranordnung (14) mit einer Anordnung von Filteranordnungen (1), wobei jede Filteranordnung (1) ein Rohr (5) aufweist, in welchem eine modulare Anordnung von in Abstand übereinander angeordneten Filtereinheiten (6) angeordnet ist, wobei jedes Rohr (5) in einem unterirdischen in ein Erdreich eingearbeiteten Schacht angeordnet ist,
wobei jedes Rohr (5) wasserundurchlässige Wandsegmente aufweist, die mit wasserundurchlässigen Material umgeben sind, wobei im Bereich der Filtereinheiten (6) Durchlassöffnungen (5a) des Rohrs (5) vorgesehen sind, welche von einem wasserdurchlässigem Material umgeben sind, wobei über die Durchlassöffnungen ein Wasseraustausch mit dem das Rohr (5) umgebenden Erdreich (2) erfolgen kann, so dass im Erdreich (2) verlaufende Grundwasserkreisläufe ausgehend von einer Filtereinheit (6) einer Filteranordnung zu einer weiteren Filtereinheit (6) dieser Filteranordnung erhalten werden, wobei die Strömungsrichtung des Wassers abhängig vom Wasserdruck des Wassers in den Filtereinheiten ist,
**dadurch gekennzeichnet,**
**dass** sich die Durchlassöffnungen (5a) jeweils über begrenzte Winkelbereiche des Rohres (5) erstrecken, und dass die Durchlassöffnungen (5a) derart angeordnet sind, dass die Grundwasserkreisläufe dieser Filteranordnung (1) gerichtet in Richtung einer benachbarten Filteranordnung (1) verlaufen,
und **dass** die Grundwasserkreisläufe benachbarter Filteranordnungen (1) miteinander in Wechselwirkung stehen.

2. Mehrfachfilteranordnung (14) nach Anspruch 1, **dadurch gekennzeichnet, dass** sich die den einzelnen Filtereinheiten (6) zugeordneten Durchlassöffnungen (5a) einer Filteranordnung (1) über dieselben Winkelbereiche erstrecken.

3. Mehrfachfilteranordnung (14) nach einem der Ansprüche 1 oder 2, **dadurch gekennzeichnet, dass** diese eine lineare oder polygonale Anordnung von Filteranordnungen (1) aufweist.

4. Mehrfachfilteranordnung (14) nach einem der Ansprüche 1 bis 3, **dadurch gekennzeichnet, dass** bei jeder Filteranordnung innerhalb des Rohrs (5) eine konzentrische Anordnung von Förderrohren (8) vorgesehen ist, oder dass außerhalb des Rohrs (5) verlaufende periphere Förderrohre (8) vorgesehen sind, wobei die Förderrohre (8) zur Oberfläche des Erdreichs (2) verlaufen und dort Öffnungen (11) aufweisen, über welche Pumpen (9) einführbar sind.

5. Mehrfachfilteranordnung (14) nach Anspruch 4, **dadurch gekennzeichnet, dass** eine Pumpe (9) in einem Förderrohr (8) in eine einer Filtereinheit (6) zugeordnete Sollposition absenkbar ist.

6. Mehrfachfilteranordnung (14) nach einem der Ansprüche 4 oder 5, **dadurch gekennzeichnet, dass** ein Förderrohr (8), in welches eine Pumpe (9) eingeführt ist zur Ausleitung von Wasser ausgebildet ist, oder dass Förderrohre (8) zur Einleitung von Wasser vorgesehen sind.

7. Mehrfachfilteranordnung (14) nach einem der Ansprüche 1 bis 6, **dadurch gekennzeichnet, dass** die Filtereinheiten (6) in voneinander wasserdicht separierten Kammern angeordnet sind.

8. Mehrfachfilteranordnung (14) nach Anspruch 7, **dadurch gekennzeichnet, dass** jeweils ein Förderrohr (8) einer Kammer zugeordnet ist.

9. Mehrfachfilteranordnung (14) nach einem der Ansprüche 4 bis 8, **dadurch gekennzeichnet, dass** die Längsachsen der Förderrohre (8) parallel zur Längsachse des Rohrs (5) verlaufen.

10. Mehrfachfilteranordnung (14) nach einem der Ansprüche 4 bis 9, **dadurch gekennzeichnet, dass** die Filtereinheiten (6) in Form von Wickeldrahtfiltern ausgebildet sind.

11. Mehrfachfilteranordnung (14) nach einem der Ansprüche 4 bis 10, **dadurch gekennzeichnet, dass** die konzentrischen Förderrohre (8) mit ihren oberen Enden oberhalb der Oberfläche des Erdreichs (2), in welchem der Schacht eingearbeitet ist, ausmünden, oder dass die peripheren Förderrohre (8) eine zum Rohr (5) rotationssymmetrische Anordnung bilden, und/oder dass die peripheren Förderrohre (8) jeweils unterhalb einer Filtereinheit (6) in das Rohr (5) einmünden.

12. Mehrfachfilteranordnung (14) nach einem der Ansprüche 7 und 11, **dadurch gekennzeichnet, dass** die Kammern durch Trennplatten (7) wasserdicht getrennt sind, und/oder dass die unteren Enden der konzentrischen Förderrohre (8) in unterschiedlichen Höhenlagen liegen und dabei jeweils einer Filtereinheit (6) zugeordnet sind.

13. Mehrfachfilteranordnung (14) nach einem der Ansprüche 11 oder 12, **dadurch gekennzeichnet, dass** die konzentrischen Förderrohre (8) jeweils in einem an der Innenwand des Rohrs (5) befestigten Zentriereinsätze (10a - 10d) gelagert sind.

14. Mehrfachfilteranordnung (14) nach Anspruch 13, **dadurch gekennzeichnet, dass** an der Außenwand eines Förderrohrs (8) ein Dichtkegel (12) vorgesehen ist, der in eine zentrale Öffnung (11) des zugeordneten Zentriereinsatzes (10a - 10d) einführbar ist, wobei ein Zentriereinsatz (10a - 10d) mit dem zugeordneten Dichtkegel (12) ein wasserdichtes Trennelement bildet, mit den Kammern mit Filtereinheiten (6) wasserdicht separiert sind.

## Claims

1. A multiple filter assembly (14) comprising an assembly of filter assemblies (1), each filter assembly (1) comprising a pipe (5) in which a modular assembly of filter units (6) arranged in spaced relationship one above the other is arranged, each pipe (5) being arranged in a subterranean shaft worked into a ground,
wherein each pipe (5) has water-impermeable wall segments which are surrounded by water-impermeable material,
wherein passage openings (5a) of the pipe (5) are provided in the region of the filter units (6), which are surrounded by a water-permeable material, wherein a water exchange with the soil (2) surrounding the pipe (5) can take place via the passage openings, so that groundwater circuits running in the soil (2) are obtained starting from a filter unit (6) of a filter assembly to a further filter unit (6) of this filter assembly,
wherein the direction of flow of the water is dependent on the water pressure of the water in the filter units,
**characterised in that** the passage openings (5a) each extend over limited angular regions of the pipe (5), and **in that** the passage openings (5a) are arranged in such a way that the groundwater circuits of this filter assembly (1) run in the direction of an adjacent filter assembly (1),
and that the groundwater circuits of neighbouring filter assemblies (1) interact with each other.

2. A multiple filter assembly (14) according to claim 1, **characterised in that** the passage openings (5a) of a filter assembly (1) assigned to the individual filter units (6) extend over the same angular regions.

3. A multiple filter assembly (14) according to one of claims 1 or 2, **characterised in that** it has a linear or polygonal assembly of filter assemblies (1).

4. A multiple filter assembly (14) according to one of claims 1 to 3, **characterised in that** each filter assembly has a concentric assembly of conveying pipes (8) inside the pipe (5), or **in that** peripheral conveying pipes (8) extending outside the pipe (5) are provided, wherein the conveying pipes (8) extend to the surface of the soil (2) and have openings (11) there, via which pumps (9) can be introduced.

5. A multiple filter assembly (14) according to claim 4, **characterised in that** a pump (9) in a conveying pipe (8) can be lowered into a desired position assigned to a filter unit (6).

6. A multiple filter assembly (14) according to one of claims 4 or 5, **characterised in that** a conveying pipe (8), into which a pump (9) is introduced, is designed to discharge water, or **in that** conveying pipes (8) are provided for the introduction of water.

7. A multiple filter assembly (14) according to one of claims 1 to 6, **characterised in that** the filter units (6) are arranged in chambers separated from one another in a water-tight manner.

8. A multiple filter assembly (14) according to claim 7, **characterised in that** a conveying pipe (8) is assigned to each chamber.

9. A multiple filter assembly (14) according to one of claims 4 to 8, **characterised in that** the longitudinal axes of the conveying pipes (8) run parallel to the longitudinal axis of the pipe (5).

10. A multiple filter assembly (14) according to one of claims 4 to 9, **characterised in that** the filter units (6) are designed in the form of angle wire filters.

11. A multiple filter assembly (14) according to one of claims 4 to 10, **characterised in that** the concentric conveying pipes (8) open out with their upper ends above the surface of the ground (2) in which the shaft is incorporated, or **in that** the peripheral conveying pipes (8) form an assembly which is rotationally symmetrical to the pipe (5), and/or **in that** the peripheral conveying pipes (8) each open into the pipe (5) below a filter unit (6).

12. A multiple filter assembly (14) according to one of claims 7 and 11, **characterised in that** the chambers are separated in a watertight manner by separating plates (7), and/or in that the lower ends of the concentric conveying pipes (8) are located at different heights and are each assigned to a filter unit (6).

13. A multiple filter assembly (14) according to one of claims 11 or 12, **characterised in that** the concentric conveying pipes (8) are each mounted in a centring insert (10a - 10d) fastened to the inner wall of the pipe (5).

14. A multiple filter assembly (14) according to claim 13, **characterised in that** a sealing cone (12) is provided on the outer wall of a conveying pipe (8), which can be introduced into a central opening (11) of the associated centring insert (10a - 10d), wherein a centring insert (10a - 10d) forms a watertight separating element with the associated sealing cone (12), with which chambers with filter units (6) are separated in a watertight manner.

## Revendications

1. Agencement de filtres multiples (14) comprenant un agencement d'agencements de filtres (1), chaque agencement de filtres (1) comprenant un tuyau (5) dans lequel est disposé un agencement modulaire d'unités de filtres (6) disposées de manière espacée les unes au-dessus des autres, chaque tuyau (5) étant disposé dans un puits souterrain creusé dans le sol,
dans lequel chaque tuyau (5) présente des segments de paroi imperméables à l'eau qui sont entourés d'un matériau imperméable à l'eau,
dans lequel des ouvertures de passage (5a) du tuyau (5) sont prévues dans la zone des unités de filtres (6), qui sont entourées d'un matériau perméable à l'eau, dans lequel un échange d'eau avec le sol (2) entourant le tuyau (5) peut se produire par le biais des ouvertures de passage, de sorte que des circuits d'eau souterraine s'écoulant dans le sol (2) sont obtenus à partir d'une unité de filtres (6) d'un agencement de filtres vers une autre unité de filtres (6) de cet agencement de filtres,
le sens d'écoulement de l'eau dépend de la pression de l'eau dans les unités de filtres,
**caractérisé par le fait que** les ouvertures de passage (5a) s'étendent chacune sur des zones angulaires limitées du tuyau (5), et que les ouvertures de passage (5a) sont disposées de manière à ce que les circuits d'eau souterraine de cet agencement de filtres (1) s'étendent en direction d'un agencement de filtres adjacent (1),
et que les circuits d'eau souterraine des agencements de filtres (1) voisins interagissent les uns avec les autres.

2. Agencement de filtres multiples (14) selon la revendication 1, **caractérisé par le fait que** les ouvertures de passage (5a) d'un agencement de filtres (1) affectées aux différentes unités de filtres (6) s'étendent sur les mêmes zones angulaires.

3. Agencement de filtres multiples (14) selon l'une des revendications 1 ou 2, **caractérisé en ce qu'**il présente un agencement linéaire ou polygonal d'agencements de filtres (1).

4. Agencement de filtres multiples (14) selon l'une des revendications 1 à 3, **caractérisé en ce que** chaque agencement de filtres possède un agencement concentrique de tuyaux d'alimentation (8) à l'intérieur du tuyau (5), ou **en ce que** des tuyaux d'alimentation périphériques (8) s'étendant à l'extérieur du tuyau (5) sont prévus, les tuyaux d'alimentation (8) s'étendant jusqu'à la surface du sol (2) et possédant des ouvertures (11) à cet endroit, par lesquelles des pompes (9) peuvent être introduites.

5. Agencement de filtres multiples (14) selon la revendication 4, **caractérisé par le fait qu'**une pompe (9) dans un tuyau d'alimentation (8) peut être abaissée dans une position souhaitée attribuée à une unité de filtres (6).

6. Agencement de filtres multiples (14) selon l'une des revendications 4 ou 5, **caractérisé en ce qu'**un tuyau d'alimentation (8), dans lequel une pompe (9) est introduite, est conçu pour évacuer l'eau, ou **en ce que** les tuyaux d'alimentation (8) sont prévus pour l'introduction de l'eau.

7. Agencement de filtres multiples (14) selon l'une des revendications 1 à 6, **caractérisé en ce que** les unités de filtres (6) sont disposées dans des chambres séparées les unes des autres de manière étanche.

8. Agencement de filtres multiples (14) selon la revendication 7, **caractérisé en ce qu'**un tuyau d'alimentation (8) est affecté à chaque chambre.

9. Agencement de filtres multiples (14) selon l'une des revendications 4 à 8, **caractérisé en ce que** les axes longitudinaux des tubes d'alimentation (8) sont parallèles à l'axe longitudinal du tube (5).

10. Agencement de filtres multiples (14) selon l'une des revendications 4 à 9, **caractérisé par le fait que** les unités de filtres (6) sont conçues sous la forme de filtres à fil angulaire.

11. Agencement de filtres multiples (14) selon l'une des revendications 4 à 10, **caractérisé en ce que** les tuyaux d'alimentation concentriques (8) débouchent avec leurs extrémités supérieures au-dessus de la surface du sol (2) dans lequel l'arbre est incorporé, ou **en ce que** les tuyaux d'alimentation périphériques (8) forment un agencement symétrique en rotation par rapport au tube (5), et/ou **en ce que** les tuyaux d'alimentation périphériques (8) débouchent chacun dans le tube (5) au-dessous d'une unité de filtres (6).

12. Agencement de filtres multiples (14) selon l'une des revendications 7 et 11, **caractérisé en ce que** les chambres sont séparées de manière étanche par des plaques de séparation (7), et/ou **en ce que** les extrémités inférieures des tuyaux d'alimentation concentriques (8) sont situées à des hauteurs différentes et sont chacune affectées à une unité de filtres (6).

13. Agencement de filtres multiples (14) selon l'une des revendications 11 ou 12, **caractérisé en ce que** les tubes d'alimentation concentriques (8) sont chacun montés dans un insert de centrage (10a - 10d) fixé à la paroi intérieure du tube (5).

14. Agencement de filtres multiples (14) selon la revendication 13, **caractérisé en ce qu'**un cône d'étanchéité (12) est prévu sur la paroi extérieure d'un tube d'alimentation (8), qui peut être introduit dans une ouverture centrale (11) de l'insert de centrage associé (10a - 10d), dans lequel un insert de centrage (10a - 10d) forme un élément de séparation étanche avec le cône d'étanchéité associé (12), avec lequel les chambres avec des unités de filtres (6) sont séparées de manière étanche.
